# EUROPEAN PATENT SPECIFICATION

(11) **EP 2 445 087 B1**
(45) Date of publication and mention of the grant of the patent: **02.01.2013**
(21) Application number: 10187375.0
(22) Date of filing: 13.10.2010
(51) Int. Cl.: H02K 1/27, H02K 9/22, H02K 7/18

(54) **A generator, in particular for a wind turbine**
Generator, insbesondere für eine Windturbine
Générateur, en particulier pour éolienne

(43) Date of publication of application: 25.04.2012
(73) Proprietor: Siemens Aktiengesellschaft, 80333 München (DE)
(72) Inventor: Besnerais, Jean Le, 7330, Brande (DK)

(56) References cited:
- WO-A1-85/05232
- WO-A1-99/18652
- WO-A1-2009/128581
- WO-A2-2009/091248
- FR-A1- 2 584 544
- JP-A- 8 298 736
- JP-A- 56 074 072
- US-A1- 2006 113 804

## Description

The present invention relates to a generator, in particular for a wind turbine, comprising a stator and a rotor with a number of magnets, arranged in circumferential direction of a rotor yoke.

Wind turbines are provided with a rotor shaft which is part of the electrical generator producing electricity during movement of the rotor relative to the stator of the generator. The stator comprises a number of coils, the rotor comprises a number of permanent magnets or electrically charged magnets so that an electric voltage is induced when the rotor is turned.

In generators heat losses occur, mainly from copper losses.

A substantial amount of heat has to be removed in order to avoid hot spots and insulation wearing. The second major part of heat losses comes from magnets.

In conventional generators for wind turbines the stack may be cooled by blowing air through the windings into an air gap between rotor and stator. This air flows through stator radial ducts and cools the magnets as well. As an alternative it is known that the stator can be liquid-cooled through pipes or hollow copper strands.

WO 2009/128581 discloses an outer-rotor type motor.

It is therefore an object of the present invention to provide a generator, in particular for a wind turbine, with an improved cooling.

According to the present invention this object is achieved in the above defined generator in that a magnet is connected to a cooling fin on the outer side of the rotor yoke by a connection means which permits a heat flow from the permanent magnet to the cooling fin.

Due to the cooling fin heat can directly flow through the connection means from a permanent magnet to the cooling fin, from where it is dissipated by the air flow. Accordingly the permanent magnet can be cooled so that high temperatures are prevented, which are unwanted.

In the inventive generator it is preferred that the connection means is a metal connector, connecting the cooling fin and the permanent magnet. A metal connector has an excellent thermal conductivity allowing for heat dissipation from the magnet to a cooling fin.

In the inventive generator the connection means can be a screw, a bolt or a rivet. Further it is possible that the connection means and the cooling fin are formed, e. g. as a threaded bolt. In this case the cooling fin can easily be connected to the permanent magnet by the connection means.

According to a further development of the inventive generator the fins can be arranged along a spiral path on the outer side of the rotor yoke. The small fins are placed along a skew shape to provide a better cooling.

According to preferred embodiment of the inventive generator a turbulator may be arranged between two neighbouring magnets. The turbulator has the effect that the convection heat transfer coefficient in the air gap between rotor and stator is improved so that a better cooling is achieved.

In a preferred embodiment the turbulator may have a tapered shape and an outer end positioned in the air gap whereby heat removal through the magnets is improved.

In order to further improve the heat transfer the inventive generator may comprise a finger plate which is bell-mouth shaped. Further a small bell-mouth piece may also be attached to a magnet at the air gap entrance, so that the pressure drop is significantly reduced when the air enters the air gap.

Further the invention refers to a wind turbine.

The inventive wind turbine comprises a generator as described above.

The invention and its underlaying principle will be better understood when consideration is given to the following description of preferred embodiments.

In the accompanying drawings:
- Fig. 1: shows a detail of a connection means of an inventive generator;
- Fig. 2: shows a second embodiment of a detail of an inventive generator;
- Fig. 3: is a perspective view of a detail of an inventive generator;
- Fig. 4: is a sectional view of a detail of an inventive generator;
- Fig. 5: is a sectional view of a detail of an inventive generator; and
- Fig. 6: is a perspective view of the inventive generator of fig. 5.

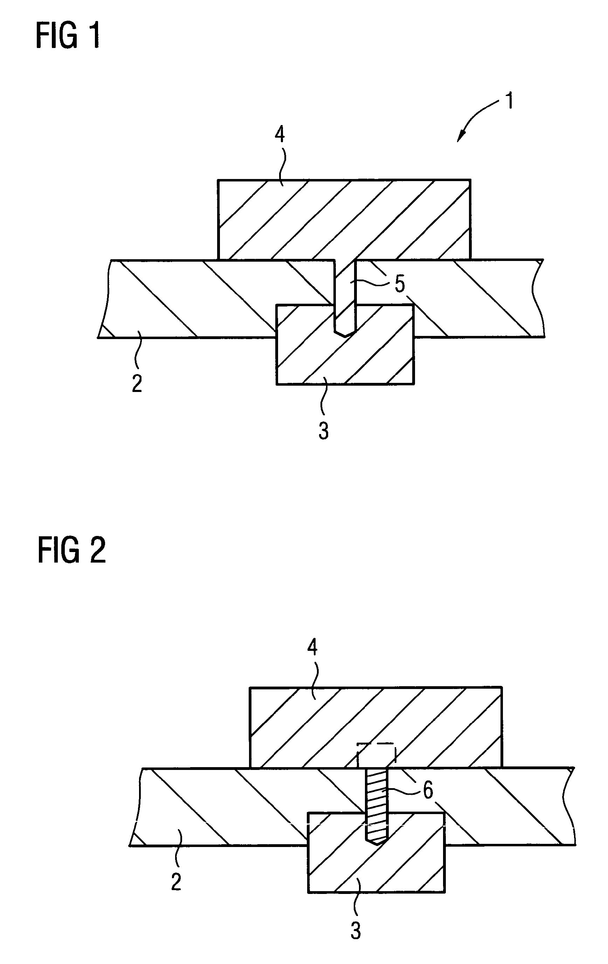

Fig. 1 shows a portion of a generator 1, whereby only a detail of the rotor yoke 2 is depicted. Generator 1 is part of a wind turbine. The rotor yoke 2 has a circular shape, in circumferential direction a number of permanent magnets 3 is fixed to the rotor yoke 2. The rotor yoke 2 is rotated around a stator (not shown), whereby an electric current is generated in stator coils. During movement of the rotor yoke 2 heat losses occur so that the permanent magnets 3 are heated up. In order to dissipate the heat a cooling fin 4 is provided on the outer side of the rotor yoke 2. The cooling fin 4 is provided with a connector 5, which is integrally formed on the lower side of the cooling fin 4. The connector 5 is made out of metal, preferably steel, and directly connected to the permanent magnet 3. Due to the high thermal conductivity of metal heat generated in the permanent magnet 3 flows through the connector 5 to the cooling fin 4, from where it is dissipated under the influence of the rotation of the rotor yoke 2.

Preferably all permanent magnets 3, which are arranged in circumferential direction of the rotor yoke 2 are connected to cooling fins 4 through respective connectors. The connector improves cooling of the permanent magnets 3 so that hot spots and defects are avoided.

Fig. 2 shows a detail of another embodiment of a generator, whereby like components are identified by like reference numbers.

In accordance with the first embodiment a number of permanent magnets 3 is positioned on a rotor yoke 2, on the outer side of the rotor yoke 2 a cooling fin 4 is provided. In contrast to the first embodiment the connector 5 is a screw 6 connecting the cooling fin 4 and the permanent magnet 3. The screw 6 is inserted through a hole in the cooling fin 4 and the rotor yoke 2, the permanent magnet 3 is provided with a thread for the screw 6. Accordingly heat which is generated in the permanent magnet 3 flows through screw 6 to cooling fin 4, from where it dissipates.

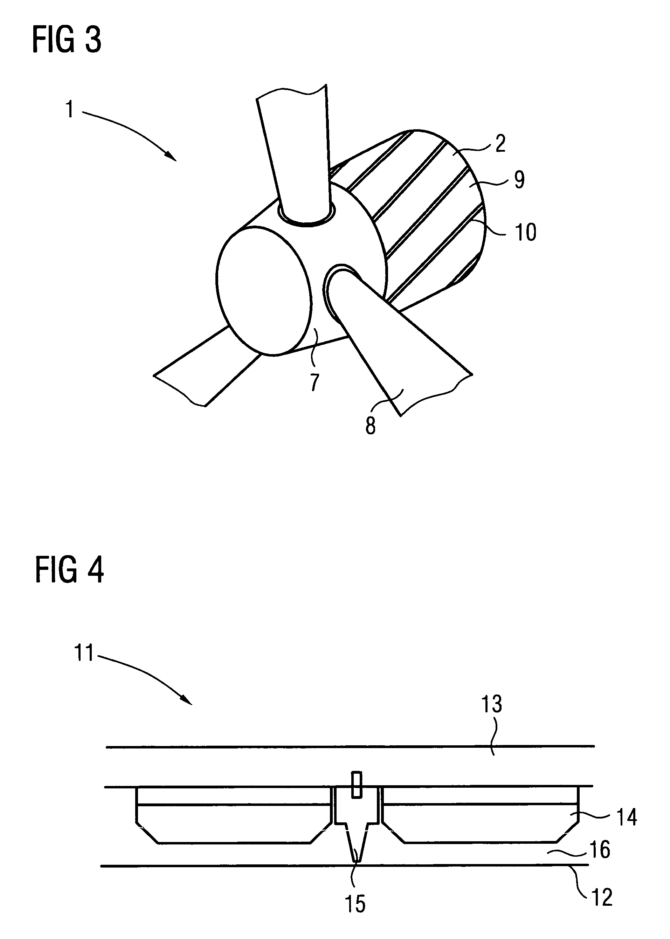

Fig. 3 is a perspective view of a detail of the generator 1, comprising a hub 7 supporting rotor blades 8. On the outer side 9 of rotor 2 a number of radial cooling fins 10 is disposed which are connected to the permanent magnet on the inner side of rotor 2. As can be seen in fig. 3 the cooling fins 10 are placed along a skew shape for a better cooling.

Fig. 4 is a sectional view of a detail of a generator 11, comprising a stator 12 and a rotor yoke 13 with a number of permanent magnets 14.

The permanent magnets 14 are spaced apart from each other, a turbulator 15 is disposed between two neighbouring permanent magnets 14, respectively. Between the permanent magnets 14 and the stator 12 an air gap 16 is provided. As can be seen in fig. 4 the turbulator 15 has an acuate end section. The turbulator 15 is fixed on the rotor yoke 13, the acuate end section points to the stator 12. The effect of the turbulator 15 is that the convection heat transfer coefficient in the air gap 16 is increased, accordingly the removal of heat through magnets 14 is increased.

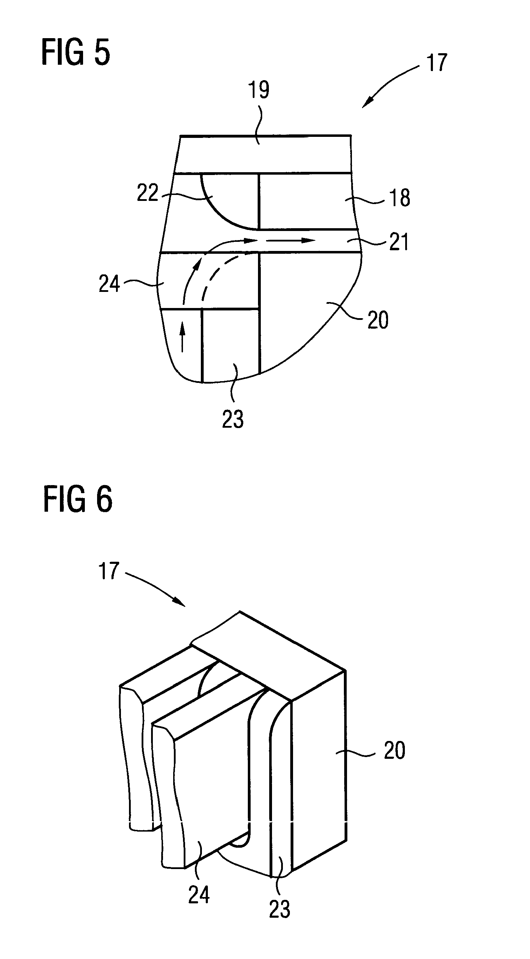

Fig. 5 and 6 show a sectional view and a perspective view of a generator 17, whereby magnets 18 are disposed on a rotor-yoke 19. Between the magnets 18 and stator 20 an air gap 21 is formed through which air flows cooling the magnet 18. Fig. 5 shows the first magnet 18 at the entrance of the air gap 21 and it can be seen that a bell-mouth piece 22 is attached to the first magnet 18. The air flow flows along a finger plate 23 and through end windings 24. In this embodiment the lamination pack of stator 20, the finger plate 23, the end windings 24 as well as the magnets 18 are cooled by the air flow. The finger plate 23 is bell-mouth shaped which leads to a significant pressure drop at the entrance of the air gap 21.

## Claims

1. A wind turbine, with a generator (1), comprising a stator and an outer rotor (2) with a number of permanent magnets (3), arranged in circumferential direction of a rotor yoke (2), **characterised in that** a permanent magnet (3) is directly connected to a cooling fin (4, 10) on the outer side of the rotor yoke (2) by a connection means which is formed on the inner side of the cooling fin (4, 10) and is inserted through the rotor yoke (2), permitting heat generated in the permanent magnet (3) to flow to the cooling fin (4) from where it is dissipated under the influence of the rotation of the rotor yoke (2).

2. A wind turbine according to claim 1, **characterised in that** the connection means is a metal connector (5), connecting the cooling fin (4) and the permanent magnet (3).

3. A wind turbine according to claim 1 or 2, **characterised in that** the connection means is a screw (6) or a bolt or a rivet.

4. A wind turbine according to any of the preceding claims, **characterised in that** the fins (4, 10) are arranged along a spiral path on the outer side (9) of the rotor yoke (2).

5. A wind turbine according to any of the preceding claims, **characterised in that** a turbulator (15) is arranged between two neighbouring permanent magnets (14).

6. A wind turbine according to claim 5, **characterised in that** the turbulator (15) has a tapered shape and an outer end arranged in an air gap between the permanent magnets (14) and the stator (12).

7. A wind turbine according to any of the preceding claims, **characterised in that** it comprises a finger plate (23) which is bell-mouth shaped.

## Patentansprüche

1. Windturbine mit einem Generator (1), der einen Stator und einen Außenrotor (2) mit einer Anzahl von Permanentmagneten (3), die in Umfangsrichtung eines Rotorjochs (2) angeordnet sind, umfasst, **dadurch gekennzeichnet, dass** ein Permanentmagnet (3) direkt mit einer Kühlrippe (4, 10) auf der Außenseite des Rotorjochs (2) durch ein Verbindungsmittel verbunden ist, welches an der Innenseite der Kühlrippe (4, 10) ausgebildet ist und durch das Rotorjoch (2) hindurch eingesetzt ist, was es ermöglicht, dass in dem Permanentmagneten (3) erzeugte Wärme zu der Kühlrippe (4) fließt, von wo aus sie unter dem Einfluss der Rotation des Rotorjoches (2) abgeleitet wird.

2. Windturbine nach Anspruch 1, **dadurch gekennzeichnet, dass** das Verbindungsmittel ein metallischer Verbinder (5) ist, der die Kühlrippe (4) und den Permanentmagneten (3) verbindet.

3. Windturbine nach Anspruch 1 oder 2, **dadurch gekennzeichnet, dass** das Verbindungsmittel eine Schraube (6) oder ein Bolzen oder ein Niet ist.

4. Windturbine nach einem der vorhergehenden Ansprüche, **dadurch gekennzeichnet, dass** die Rippen (4, 10) entlang eines spiralförmigen Weges an der Außenseite (9) des Rotorjochs (2) angeordnet sind.

5. Windturbine nach einem der vorhergehenden Ansprüche, **dadurch gekennzeichnet, dass** ein Turbulator (15) zwischen zwei benachbarten Permanentmagneten (14) angeordnet ist.

6. Windturbine nach Anspruch 5, **dadurch gekennzeichnet, dass** der Turbulator (15) eine konische Form und ein äußeres Ende, das in einem Luftspalt zwischen den Permanentmagneten (14) und dem Stator (12) angeordnet ist, aufweist.

7. Windturbine nach einem der vorhergehenden Ansprüche, **dadurch gekennzeichnet, dass** sie ferner eine Fingerplatte (23) umfasst, welche glockenförmig ausgebildet ist.

## Revendications

1. Éolienne pourvue d'un générateur (1) comprenant un stator et un rotor extérieur (2) présentant un nombre d'aimants permanents (3) agencés dans la direction circonférentielle d'une culasse de rotor (2), **caractérisée en ce qu'**un aimant permanent (3) est relié directement à une ailette de refroidissement (4, 10) sur le côté extérieur de la culasse de rotor (2) grâce à un moyen de connexion qui est formé sur le côté intérieur de l'ailette de refroidissement (4, 10) et qui est inséré à travers la culasse de rotor (2), permettant à la chaleur générée dans l'aimant permanent (3) de s'écouler vers l'ailette de refroidissement (4) où elle est dissipée sous l'effet de la rotation de la culasse de rotor (2).

2. Éolienne selon la revendication 1, **caractérisée en ce que** le moyen de connexion est un connecteur métallique (5) reliant l'ailette de refroidissement (4) et l'aimant permanent (3).

3. Éolienne selon la revendication 1 ou 2, **caractérisée en ce que** le moyen de connexion est une vis (6) ou un boulot ou un rivet.

4. Éolienne selon l'une quelconque des revendications précédentes, **caractérisée en ce que** les ailettes (4, 10) suivent un trajet en spirale sur le côté extérieur (9) de la culasse de rotor (2).

5. Éolienne selon l'une quelconque des revendications précédentes, **caractérisée en ce qu'**un générateur de turbulences (15) est disposé entre deux aimants permanents adjacents (14).

6. Éolienne selon la revendication 5, **caractérisée en ce que** le générateur de turbulences (15) a une forme conique et une extrémité extérieure située dans un entrefer entre les aimants permanents (14) et le stator (12).

7. Éolienne selon l'une quelconque des revendications précédentes, **caractérisée en ce qu'**elle comprend une plaque à doigts (23) qui a une forme évasée.
